# EUROPEAN PATENT APPLICATION

(11) **EP 3 809 278 A1**
(43) Date of publication of application: **21.04.2021**
(21) Application number: 19203108.6
(22) Date of filing: 14.10.2019
(51) Int. Cl.: G06F 16/27, H04L 29/08, H04L 29/06, H04L 9/32

(54) **METHODS OF OPERATING A DISTRIBUTED DATABASE, NETWORK, NODES, COMPUTER PROGRAM PRODUCT AND DATA CARRIER SUITABLE FOR SUCH METHODS**

(71) Applicant: ING Bank N.V., 1102 MG Amsterdam (NL)
(72) Inventor: Koren, Aleksei, 1076PK Amsterdam (NL); van den Bos, Mathijs, 3514TN Utrecht (NL)
(74) Representative: EP&C

(57) **Abstract**

A network operates, or is arranged to operate, a distributed database which is stored in a distributed manner in first nodes of the network. When changes are to be made to the distributed database, a first node (referred to as a transmitting first node) generates an intended state transition of a data record and the validity thereof is verified by a second node. Only if the second node deems the state transition a valid one is the state of the data record transitioned from a current state to a new state.

The second node does receive more data than just the identifier of the current state and can assess the validity of the intended state transition. Accordingly, the risk that a state is misappropriated by a node without proper rights to do so is reduced. However, contrary to the known methods and systems, the validity is determined without the second node receiving data from which the current content or the new content of the database record can be derived, i.e. the values of the fields of the data record are not present at the second node, nor can they be calculated (or at least not within an acceptable period of time) from the data at the second node.

## Description

### Field of the invention

This invention relates to methods of operating a distributed database, as well as nodes, networks, computer program products and data carriers suitable for such methods.

More specific, this invention relates to methods, equipment and computer program products for operating a distributed database and making modifications to the data records in the database in a secured manner.

### Background of the invention

The use of distributed databases which are distributed over a number of computing devices is known, as well as ways in which the data records of the distributed database can be shared, replicated and synchronized over the devices.

For example, International patent application publication WO2017182788 discloses a computing environment which comprises a distributed database. In the database content information associated with a digital document is stored, such as its content, as well as information associated with rights or obligations associated with the digital document, such as allowed types of changes to the digital document. In this system, when a change is proposed by a user of the distributed database to a document, a uniqueness service evaluates the proposed transaction and determines priority, by for example, a date-time stamp, thus ensuring that proposed transactions do not conflict and are operated on the latest version of the state object.

Software implementing the concept disclosed in this International patent application publication is made available in open source code under the name "Corda" by R3 LDT of London, United Kingdom. The current implementation of this software provides, when the software is running, a uniqueness service referred to by R3 LTD as a "notary service", which is a validating network service run by a node in the network that judges the validity of transactions based on a predetermined set of criteria. The nodes maintaining the distributed database select this validating network service, and accordingly the service is supposed to be sufficiently secure and protected by the operators of the network.

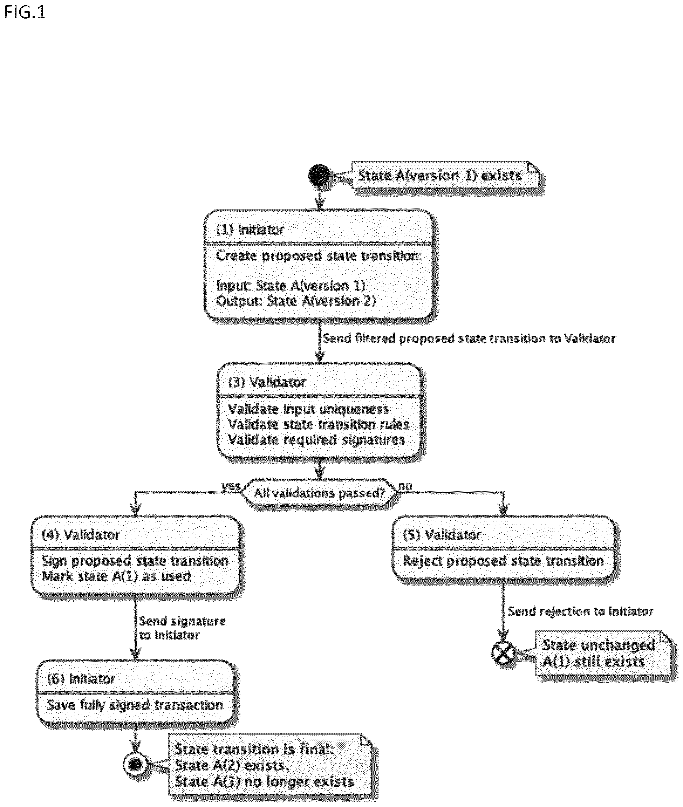

In the software, this network can be configured in two ways to operate the validating network service: either as a "Validating notary", or as a "Non-validating notary". In the first configuration, as is illustrated in FIG. 1, the node running the validating network service receives a message with the full contents of a transaction and verifies the intended state transition against a predetermined set of rules to validate (or invalidate) the changes. In the second configuration, the node running the validating network service receives a message with an identification of the current state of a digital document but not the contents of the document nor of the intended state transition. The validating network service then judges validity of a transaction by determining whether or not the electronic document is listed as being changed already or not.

Since the notary service is selected by the operator, the service meets the security and protection requirements set by the operator. However, it is believed by the inventors that the network service still presents security risks. In the first configuration, the node running the validating network service has visibility of operations between nodes maintaining the distributed database. As such the main risk here is a loss of privacy for which the repercussions are potentially substantial. For instance, the validating network service could send the message further (e.g. resulting in a leak of confidential data) or the validating network service could use the received information in an unauthorized manner, for example if an intruder from outside the network obtained unauthorized access to, and control over, the network service.

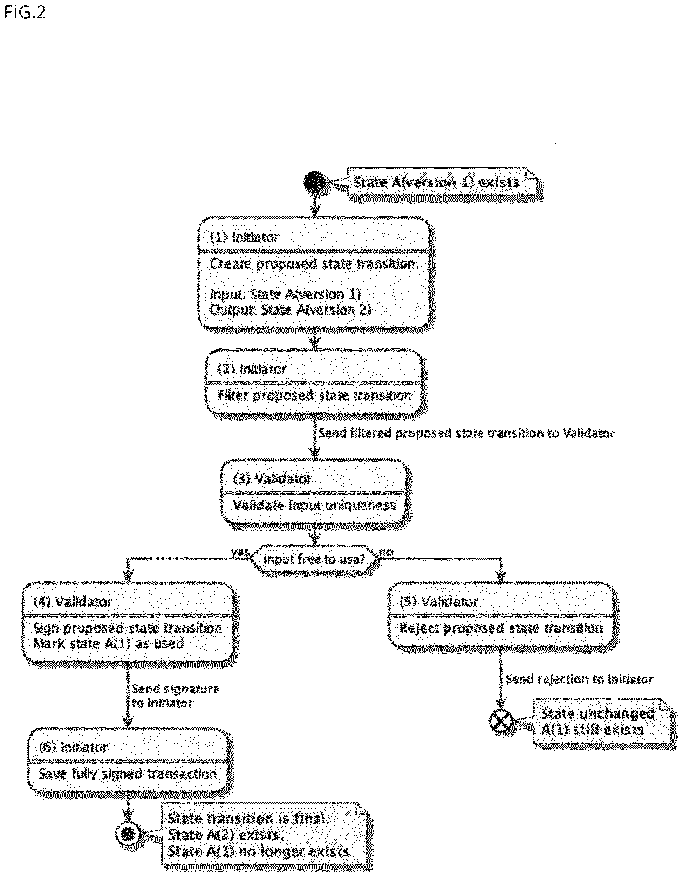

In the second configuration, as is illustrated in FIG. 2, the network service will not receive the contents of a transaction but will judge the uniqueness of a transaction based on input, in order to avoid a document being changed twice. This however presents another significant security risk. For instance, in the case of a "denial of state" attack an attacker could introduce its own transaction and maliciously change the state of an electronic document owned by another party and hence block the legitimate changes. In this case, the non-validating notary would approve the new transaction of the attacker (rather than the correct transaction) unaware of the misappropriation, due to not validating the contents of the transaction.

In other to strengthen security, R3 LTD has proposed to adapt the Corda software to run on special integrated circuit processors with protected, private regions of memory named "Software Guard Extensions", SGX, enclaves, which can only be changed by software running within the protected, private region. These regions are a feature of special integrated circuit processors sold by Intel Corporation of Santa Clara, California, United States of America. More specifically, R3 LTD has proposed to run the validating network service in such a region, see https://docs.corda.net/head/design/sgx-integration/design.html. However, there are some major drawbacks to such an approach. First of all, the protection is a built-in feature of the integrated circuit processors. This means that there is a requirement for inherent trust of the processor design and manufacturing to provide for a sufficient protection of the enclave, and e.g. that the private keys used to encrypt the regions not be disclosed or leaked by the manufacturer.

In addition, a number of security issues have arisen already, which raises questions with regard to the security of such processors, especially in relation to side channel attacks. For example, branch prediction in which branched code is speculatively executed may provide external access to the data inside the protected regions, see e.g. Chen et al., "SGXPECTRE Attacks: Stealing Intel Secrets from SGX Enclaves via Speculative Execution", 2019 IEEE European Symposium on Security and Privacy (EuroS&P), Stockholm, Sweden, 2019, pp. 142-157; Van Bulck et al. "Foreshadow: Extracting the keys to the intel {SGX} kingdom with transient out-of-order execution", 27th {USENIX} Security Symposium ({USENIX} Security 18) 2018, pp. 991-1008. As another example, Return-Oriented Programming (ROP) techniques may be used to obtain unauthorized access the protected regions, as is known from Lee et al., "Hacking in Darkness: Return-oriented Programming against Secure Enclaves", 26th {USENIX} Security Symposium ({USENIX} Security 17) 2017, pp. 523-539.

### Summary of the invention

The present invention provides methods for operating a distributed database, networks and nodes suitable for such methods, a computer program product and data carriers as described in the accompanying claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
FIG. 1 schematically shows a flow chart of an example of a known method of operating a distributed database in a data communication network.
FIG. 2 schematically shows a flow chart of an example of another known method of operating a distributed database in a data communication network.
FIG. 3 schematically shows a topology of an example of an embodiment of a network with a distributed database.
FIG. 4 schematically shows a flow chart of an example of method of operating a distributed database in a data communication network.
FIG. 5 schematically shows an architecture of an example of state transition software and verification software suitable for the examples of FIGs. 3 and 4.
FIG. 6 shows a block diagram of a part of state transition software and verification software suitable for the example of FIG. 5.

### Detailed description of the preferred embodiments

Because the illustrated embodiments of the present invention may for the most part, be implemented using electronic components and devices known to those skilled in the art, details will not be explained in any greater extent than considered necessary as illustrated for the understanding and appreciation of the underlying concepts of the present invention and in order not to obfuscate or distract from the teachings of the present invention.

In summary, in the examples, a network operates, or is arranged to operate, a distributed database which is stored in a distributed manner in first nodes of the network. When changes are to be made to the distributed database, a first node (referred to as a transmitting first node) generates an intended state transition of a data record of the database and the validity thereof is verified by a second node. Only if the second node deems the state transition a valid one is the state of the data record transitioned from a current state to a new state.

The second node does receive more data than just the identifier of the current state and can assess the validity of the intended state transition. Accordingly, the risk that a state is misappropriated by a node without proper rights to do so is reduced. However, as explained below in more detail and contrary to the known methods and systems, the validity is determined without the second node receiving data from which the current content or the new content of the database record can be derived, i.e. the values of the fields of the data record are not sent to the second node and hence not present at the second node, nor can they be calculated from the data at the second node.

Accordingly, in case of a breach of security of the second node, e.g. by unauthorized external access thereto, the actual contents of the distributed database cannot be obtained at the second node, and accordingly the impact of the breach can be reduced. Thus, the protection of the contents of the database is less dependent on the protection against unauthorized access or modification of data related to the database stored in the second node, and the protection of the contents of the database is increased.

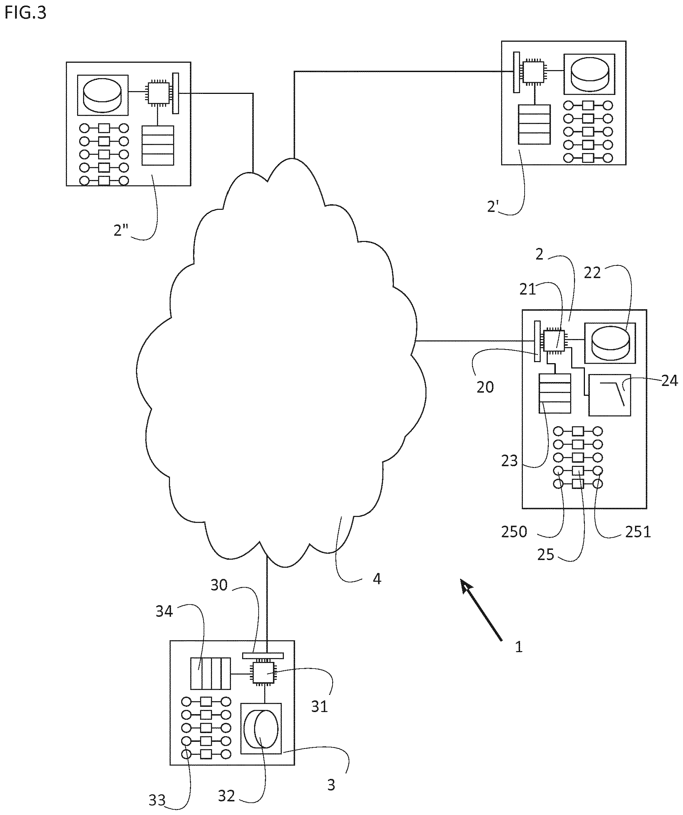

Referring to FIG. 3, an example of a network 1 operating a distributed database is shown therein. The database can e.g. be a relational database. The database can e.g. represent an unused state transition output data model where each record of the database represents a single current, also referred to as un-used, state of an object only. When the current state is used by a state transition, a new state of the object is generated as determined by predetermined rules and constraints which define the state transition. The current state then becomes a used, also referred to as past or historic, state. Hence, after a state transition the current state, which was used as input for the transition, is not available anymore for use as input for another state transition.

The network 1 comprises first nodes 2,2',2" and second nodes 3. The nodes 2,2',2",3 are connected to each other via suitable network connections 4. The network connections can e.g. use publicly available network infrastructure, such as the internet, or private network infrastructure, such as a private IP network. Each of the nodes comprises an active electronic device that is attached (or attachable) to the network connection, and when attached is capable of creating, receiving, or transmitting data over a communications channel, not shown, of the network 1.

In a database memory 22 of the first nodes 2,2',2", data records of the distributed database are stored, which are maintained and synchronized between the nodes 2,2',2". In this example, the first nodes are communicatively connected to exchange messages about state transitions to the data records of the distributed database to synchronize corresponding data records between them.

In this respect, each first node may have a set of data records. The sets of the different first node may be the same or may be different and a data record may be present in multiple versions, i.e. different nodes having a version, or may be present in a single version only. In this example, each first node only stores a subset of the database in the database memory. For example, the network 1 may be preconfigured such that each first node 2,2',2" only stores a predetermined subset of the set of data records. As a result, each first node has the part of the contents of the database corresponding to the subset. For instance, for each of the first nodes 2,2',2" the subset may be smaller than the set, in which case no database memory contains the full database.

For example, the predetermined subset of records may be the records for which a first node is pre-set, or requested, to perform operations or phrased more colloquially: each first node stores in its database memory a subset of database records on a "need to know" basis, where the "need to know" is defined as being preconfigured or requested to perform an operation involving a record. More specifically, in this example, each first node stores in the database memory only records the first node is:
▪ authorized to modify, e.g. to apply a state transition to; and/or
▪ is listed as an approver for state transitions initiated by another first node.

In this example, the network is configured such that each modification to a record of the database has to be send and approved by the second node 3. The second node 3 comprises a register memory 32 in which data is stored which identifies whether or not a current state of a data record is allowed to be modified or not.

In this example, the network 1 has multiple first nodes but the invention is not limited to such a network 1, and likewise applies to a network 1 with a single first node 2.

A node 2,3 may have a network address, such as an IP address, which allows other nodes in the network to address the node and send data to that address. In this example, the network 1 is a private network and each node has a private address, which within the network is unique and, preferably, is not visible by nodes outside the network. However, alternatively, the network 1 may uses public addresses and e.g. the nodes be connected by a public data communication network infrastructure, such as the internet, to each other, and network membership and communication rights be defined a higher OSI level than the networking layer or higher than the transport layer of the infrastructure. The network can be a peer-to-peer network.

Preferably but not necessarily, a node can only communicate with other nodes in the network when authorized to join the network by an access control node, also referred to as a "gatekeeper" node or a "doorman" node. The access control node may e.g. sign a public key certificate, and a node can only communicate with other nodes in the network with a signed certificate obtained from the gatekeeper node. In such a case, access to the network is limited to the nodes meeting the requirements set by the access controlling node for issuing the certificate. The network may for instance comprise a, not shown in this example, central registry in which certificates and identities are stored. A node can then be added to the network by sending a request for a certificate to the central registry and receiving a response from the central registry with a signed certificate assigned to the node. For example, the central registry may store digital certificates and identities of the nodes in the network. The central registry may be part of a node which assigns in response to receiving a request from a joining node a certificate to the node permissioned to the network upon reception of a public key, and the nodes may use the certificate. However, other techniques for controlling access to a network may be used instead. For instance, the network may be a private IP-based network and the access control node assign a private IP address to the first node, just to give an example.

The first node 2 shown in FIG. 3 comprises a network interface 20 which connects the node to the network. An integrated circuit processor 21 is arranged to run state transition software to manipulate data records of the distributed database. The integrated circuit processor may e.g. be a general-purpose processor. However, alternatively, the integrated circuit processor 21 may be an application specific processor, or a set of several processor. The processor may e.g. be one or more general-purpose processors as commercially available from Intel Corporation of Santa Clara, California, United States of America under the name "Intel® Xeon® Scalable".

At least some records of the database are stored in a database memory 22 connected to the integrated circuit processor 21. The node 2 further comprises a software memory 23 connected to the integrated circuit processor 21 in which the software is stored as instructions executable by the integrated circuit processor. The software memory 23 may for example be a non-transitory, tangible memory such as a non-volatile memory, e.g. a hard-disk or a read-only memory or a volatile memory, such as ready-access memory or processor cache memory, and it will be apparent that the software memory 23 may comprise different memories (e.g. hard-drive, RAM and cache) used in the execution by the processor of software.

The first node 2 further comprises a filter 24 connected to the database memory 22, which when operating, filters predetermined content data out of a data record of the database, and provides filtered data identifying a current state of the filtered data record.

A set of one or more, predetermined and pre-set, state machines 25 is also present in the first node 2. The state machine 25 has one or more state inputs 250 and one or more state outputs 251. The state machine generates, when the state inputs 250 are filled with input values, e.g. with the values of the fields of a data record, output values presented at state outputs 251 which represent a new state for a data record, if and when the rules and constraints of the state machine are met and as defined by the input-output transfer function of the state machine. The state machine may for example require additional data to generate a new state, for example one or more digital cryptographic signatures from nodes, or users of nodes, linked to one or more fields of the data record, or data from other data records, for example.

The state machine may for example be implemented as program code defining a set of instructions executable by the integrated circuit processor 21. The state machine 25 may be any suitable type of state machine, and for example be formed by a code executable by the integrated circuit processor in which the rules and constraints are expressed, for example as a finite state machine such as a virtual arithmetic circuit or TinyRAM instructions. In this respect the term "arithmetic circuit" refers to code defining in software a virtual circuit of gates and connections between the gates where the gates, instead of Boolean operations, perform addition or multiplication operations on the input of the gates. Reference is made to Ben-Sasson, Eli, et al. "TinyRAM architecture specification, v0. 991." (2013), incorporated herein by reference, for a description of TinyRam instructions. Preferably, the state machines, and more preferably the set of state machines, is predetermined and preconfigured and are not modifiable once the network has been put in operation.

The state machine 25 may define the rules and constraints of a simple state transition, such as a simple operation involving a single current state, which transitions the object from the current state to a single new state. However, the operation may be more complex, and e.g. also use other current states, e.g. transition other objects from a current state to a new state. For example, multiple current states may transition into a single new state. Likewise, a state transition may create new states that may be descendants of used states (e.g. copies with changed access rights to modify the record of the used state) or they may be unrelated new states, e.g. newly created records created by the state transition.

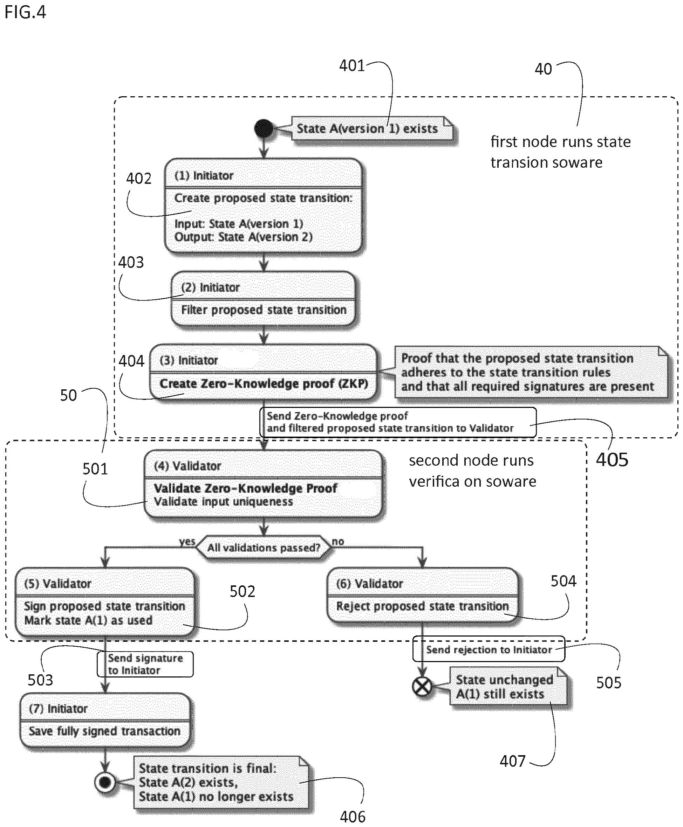

The integrated circuit processor 21 is connected to the database memory 22, to (connections not shown in FIG. 3) all the state machines 25 of the set, and to the software memory 23 to retrieve and execute the instructions therein, as is explained below with reference to FIGs. 4-6.

FIG. 3 further shows a second node 3. In the shown example, for sake of simplicity, the network is illustrated with only a single second node, however it will be apparent that the network may comprise two or more second nodes. In such a case, each or several second nodes may perform a verification process in response to receiving a verification request message from a transmitting first node 2 and the second nodes may be provided with software which, when executed by the integrated circuit processors thereon, causes the second nodes to synchronize the verification. Alternatively, the verification request message may be sent to one selected second node selected by the transmitting first node 2, e.g. selected out of the multiple second nodes based on the predetermined rules coupled to the data record to be changed or coupled to the selected state machine.

The second node 3 shown in FIG. 3 comprises a network interface 30 which connects the node 3 to the network 1. The second node 3 comprises an integrated circuit processor 31 arranged to run verification software to verify the intended state transition against a predetermined set of one or more verification rule defined by a verification state machine. The integrated circuit processor may e.g. be a general-purpose processor. However, alternatively, the integrated circuit processor 21 may be an application specific processor, or a set of several processor. The processor may e.g. be one or more general-purpose processors as commercially available from Intel Corporation of Santa Clara, California, United States of America under the name Intel® Xeon® Scalable.

The node 3 further comprises a software memory 34 in which the software is stored as instructions executable by the integrated circuit processor.

The node 3 has a register memory 32 in which a register is stored with data identifying whether or not current states of the data records are allowed to be modified or not. More specifically in this example, the second node 3 is arranged to verify whether or not the current state has been modified already. To that end, for instance, in the register memory 32 a database may be stored with a transition history, such as at least identifiers for at least each of the used states directly preceding the current states. In such a case, the second node 3 can verify whether an intended state transition pertains to a current state, i.e. to a record that is not marked as used in the register memory 32, or not.

However, various other alternative types of such data are possible as well. For example, the register memory 32 may contain at least identifiers for each of the current states. In such a case the second node may compare an intended state transition pertains to a current state on the list, and if not reject the intended state transition.

Also, for example, the register memory 32 may contain identifiers for used states further back. For example, the register memory 32 may contain identifiers of all past states preceding the current state. In such a case, the second node can verify that the intended state transition does not pertain to a state with an identifier in the register memory. In addition, in such a case the second node 3 can verify whether or not a current state is part of an uninterrupted chain of state transitions from the state in the initial database to the current state.

The second node 3 further comprises a set of verification state machines 33. The verification state machines 33 may be any suitable type of state machines such as described above for the state machines 25 of the first node.

Each state machine 25 of the first node 2 has an equal in a verification state machine 33 of the second node 3. The set of verification state machines thus comprises, or consists of, equals for all the state machines of the set of the first node. In this respect, the term "equal" refers to the state machine generating the same output state in response to the same input state and having the same rules and constraints. Equal state machines may for example be generated by compiling the same human readable code into a suitable object code. In case the network comprises two or more first nodes, the set of verification state machines of second node may comprise an equal verification state machine for each of the state machines of all the first nodes.

The integrated circuit processor 31 is connected to the register memory 32 and to (connections not shown in FIG. 3) all the state machines 33 of the set and is further connected to the software memory 34 to retrieve and execute the instructions of the verification software therein, as is explained below with reference to FIG. 3.

The example shown in FIG. 3 can be used in a method of operating a distributed database, such as illustrated with the flow chart in FIG. 4. The method of operating a distributed database illustrated therein is performed with a data communication network 1 comprising one or more, transmitting, first nodes 2 and one or more second nodes 3, e.g. as implemented in accordance with the example of FIG. 3. As illustrated with block 40 in FIG. 4, the method comprises the integrated circuit processor 21 of the first node 2 running the state transition software.

The running 40 comprises, as illustrated with block 401, inputting a selected data record into a selected state machine selected out of the set of state machines and thereby as illustrated with block 402, generating an intended state transition of the selected data record from a current state of the selected data record to a new state of the selected data record in accordance with rules and constraints of the selected state machine.

As illustrated with block 403, the integrated circuit processor of the first node passes the data record in the current state through the filter to obtain the state identification data representing an identifier unique for the current state of the selected data record, with a content of the fields of the selected data record, at least partially or completely, filtered out of the identifier by the filter. The output of the filter may be contentless data from the record, such as e.g. identifiers of the current state(s), an identifier of the intended state transition and/or a hash value obtained from the content, just to name some examples.

As illustrated with block 404, the integrated circuit processor 21 of the first node 2 further calculates verification data with a one-way function of which the input variables comprise the current state and the new state. In this example, for instance, the input variables comprise the full intended state transition, i.e. current states, new states, operands, etc.. The one-way function generates with these input variables one or more output values which are used, or at least usable, by the second node to verify whether or not the intended state transition meets the rules and constraints of the selected state machine.

As illustrated with block 405, the transmitting first node 2 then transmits to the second node a verification request message without the input variables. In this example, the verification request message contains: the state identification data, state machine identification data representing an identification of the selected state machine, and the verification data. Said differently, the verification request message does not contain the content of the intended state transition, but only data allowing verification of validity of the intended state transition, such as:
1. compliance of the state transition with the rules and constraints of the selected state machine; and
2. uniqueness of the intended state transition, i.e. that the current state identified in the verification request message has not already been changed by another, hence conflicting, verification request message.

The verification request message may contain various other data required for the verification by the second node, but does not contain the content of the current state or the new state. For example, the verification request message may contain a cryptographic signature of the first node, e.g. a digital certificate signed with the private key of the transmitting node for example, to enable the second node to verify authenticity of the verification request message for instance.

As illustrated with block 50, in this example, the verification request message is received at the second node 3. Thus, the information about the state machine involved is shared between the second node and the transmitting first node, in the sense that the second node receives information identifying the verification state machine. Accordingly, the type of transition is known but the second node does not receive the content of the current state or the, intended, new state of the data record. In case of a breach of security of the second node, e.g. by unauthorized external access thereto, the actual contents of the distributed database can therefore not be obtained, and the impact of the breach can be reduced. In this respect, the term "security of the second node" refers to the protection of data in the register memory or other memories of the second node against unauthorized access.

Thus, the protection of the contents of the database is less dependent on the protection and strength of encrypting data on the second node 2. It will be apparent though that the second node may be, and preferably is, secured and protected against unauthorized access, e.g. to avoid tampering with the verification software running on the second node.

In response to receiving the verification request message, the integrated circuit processor in the second node will run the verification software, as illustrated with block 50, to verify the intended state transition for compliance with the rules and constraints of the selected state machine.

In this example, the running comprises, as illustrated with block 501, determining the verification state machine equal to the selected state machine using the state machine identification data. The integrated circuit processor further verifies with the verification data whether or not the intended state transition meets rules and constraints of the verification state machine. For example, the integrated circuit processor may, as is explained below in more detail, use the verification data as public input to a verification method in accordance with a zero-knowledge protocol to obtain a mathematically sound proof whether or not the intended state transition meets the rules and constraints of the verification state machine. Such a zero-knowledge protocol can e.g. be a non-interactive protocol in which except for the verification request message, the first node and the second node do not exchange data for the verification. The running may further comprise verifying whether or not the current states of the intended state transition have not been used already, i.e. that the current states identified in the verification request message are actually current states and not past or used states. To that end, the state identification data in the verification request message may be compared with the data in the registry memory 32.

As illustrated with block 502 if the state transition meets the rules and constraints of the equal verification state machine, the integrated circuit processor approves the intended state transition and, as illustrated with block 503, sends a confirmation message to the transmitting first node 2. Depending on the specific implementation, if the state transition does not meet the rules and constraints, the integrated circuit processor 30 may output via the interface 30, a reject message to the transmitting first node 2 (and optionally to other nodes in the network 1), as is illustrated with blocks 504 and 505. Alternatively, the second node may do nothing, and the first nodes e.g. be implemented to cancel the state transition process after a predetermined time-out period has expired from the transmission of the verification request message.

If and when the confirmation message is outputted, the method further comprises reception by the first node 2 of the confirmation message. As is illustrated with block 406, the first node 2 accepts the intended state transition in response to the reception and adjusts the data record according to the intended state transition. As illustrated with block 407, the first node may cancel the state transition process if the confirmation message is not received, e.g. when the reject message is received instead.

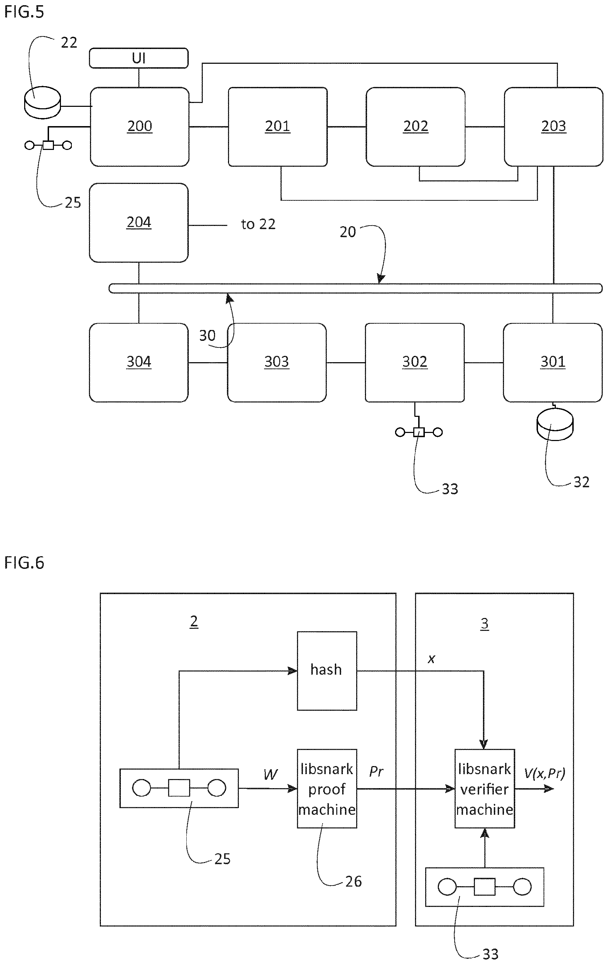

A method as illustrated in FIG. 4 may be performed by execution of state transition software by one or more first nodes 2 and of verification software by one or more second nodes 3. Referring to FIG. 5, an example of an architecture of the state transition software and of the verification software is illustrated.

As shown, the state transition software comprises instructions 200-203 executable by the integrated circuit processor 2.

Input instructions 200 cause, when executed, inputting of a selected data record into a selected state machine 25 and thereby generate an intended state transition of the selected data record from a current state of the selected data record to a new state of the selected data record in accordance with rules and constraints of the selected state machine 25.

For example, execution of the input instructions 200 may be triggered by inputting at a user-interface of data by a human operator of the node. In FIG. 5, for example the input instructions 200 are shown to receive input from the user interface Ul. Alternatively, or additionally, the execution may be triggered by receiving e.g. at the interface 20 data triggering the execution, such as data generated by a non-human operator, e.g. a machine. For example, in case data records are linked and several nodes are authorized to change data records, a change to a linked data record may trigger execution. Likewise, as another example, in case the distributed database is used to track a product during manufacturing, a machine may send data indicating that a manufacturing step has been completed and that the semi-finished product is handed over to another machine, and accordingly that the status and location field have to be updated, or a machine may send barcode scan data acknowledging that a semi-finished product has been received and thus that a location has to be updated.

The operator may for example provide input, such as an identification of the database record, the type of transition and values of at least some fields of the record in the desired new state, and that the integrated circuit processor 21 will execute the input instructions 200 in response to the operator input. The instructions 200 may for example be to fetch the values of the corresponding data record and input them into the selected state machine. The input in the selected state machine generates an intended state transition of the selected data record from a current state of the selected data record to a new state of the selected data record in accordance with rules and constraints of the selected state machine. In case the input is not sufficient to meet those constraints, the integrated circuit processor 21 may e.g. execute instructions to obtain the missing input, e.g. such as electronic signatures of nodes set by the rules and constraints as required approvers of the state transition, or additional data from other data records, just to name some examples. In response to receiving the additional input, and once all the input required for the selected state machine is received, the input instructions 200 may then cause output of the intended state transition to other instructions of the software with which the input instructions 200 interface.

Filter instructions 201 cause, when executed, to pass the data record in the current state through the filter 24 to obtain state identification data representing an identifier of the current state of the selected data record. Execution of the filter instructions 201 may e.g. be triggered by the same event as execution of the input instructions 200, and may be performed, before, in parallel with, or after execution of the input instructions 200.

Verification data calculating instructions 202 may interface with the input instructions 200 to receive the intended state transition and cause, when executed, to calculate verification data with the one-way function described above with reference to block 403 in FIG. 4. An example of such a calculation is explained below in more detail with reference to FIG. 6.

Transmission instructions 203 may interface with input instructions 200, the filter instructions 201 and the verification data calculating instructions 202, to receive the output of those instructions as input. Transmission instructions 203 cause, when executed, transmission to the second node 3 of the verification request message. Execution of the transmission instructions 203 may e.g. be triggered by the completion of input instructions 200, filter instructions 201 and verification data calculating instructions 202. The transmission instructions 203 may cause e.g. the opening of a data channel with the second node and transmitting the verification request message, e.g. in accordance with a pre-established protocol such as the Advanced Message Queuing Protocol defined in ISO/IEC 19464:2014. The transmission instructions 203 may further comprise a subset of instructions which causes assembling of the verification request message with the state identification data, the verification data and the state machine identification data, and, optionally, any other data not providing information about the contents of the intended state transition.

Acceptance instructions 204 are connected to the network interface 20 and cause, when executed, in response to receiving a confirmation message from the second node at the network interface 20, acceptance of the intended state transition and adjusting in the memory the data record according to the accepted state transition, or else rejection of the intended state transition and maintain the data record unchanged.

The verification software comprises instructions executable by the integrated circuit processor. These instructions comprise initiating instructions 301 coupled, as shown, to the network interface 30 to run the verification software in response to receiving at the second node a verification request message.

The initiating instructions may further, for example, determine the uniqueness of the current state(s) subject of the intended state transition, as was explained above with reference to block 501 of FIG. 4. To that end, initiating instructions 301 may, as shown, interface with the registry memory 301.

State machine selection instructions 302 interface the initiating instructions 301 and cause, when executed, a selection of a verification state machine equal to the selected state machine using the state machine identification data. Execution of the selection instructions 302 may e.g. be triggered by a call from the initiating instructions 301.

Verification instructions 303 interface the selection instructions 302 and cause, when executed, verification with the verification data that the intended state transition meets rules and constraints of the verification state machine, for example as explained below.

Confirmation instructions 304 interface the verification instructions and the network interface 30. When executed, confirmation instructions 304 cause, if the state transition meets the rules of the equal verification state machine, output at the interface of a confirmation message to the first node. Execution can e.g. be triggered by the confirmation instructions 304 outputting an accept or a reject message.

In the example of a method described above, the transmitting first node 2 may prior to sending the verification request message to the second node 3, interact with other first nodes. For example, the transmitting first node may transmit an intended transition message to a recipient first node 2' when the rules and constraints of the selected state machine impose approval of the recipient first node. In the shown example, the network inhibits broadcasting messages and the intended transition message is only transmitted to selected recipient first nodes, selected by the transmitting first node based on the intended state transition.

Referring to the example of FIG. 3, the network shown therein comprises for example two first nodes. In the interaction, a first node is the transmitting first node 2 described above, while another first node is a recipient first node 2'. The transmitting first node 2 and the recipient first node 2' may for example have corresponding data records stored in their respective database memory, i.e. the records are duplicated over the transmitting first node 2 and the recipient first node 2'. Additionally or alternatively, they may have complementary records, such as where for the intended state transition of a first record on a node 2 data from another, not corresponding, record on another node 2'is required.

For example, the rules and constrains of the selected state machine may require an approval of the recipient first node 2'. The state machine may e.g. have an input at which a signature value of the recipient first node 2' is to be inputted, such as a signature provided with a public-private key signing process, and without which the state machine does not generate a new state. The recipient first node 2' may then be implemented similar to the transmitting node described above, with the following addition. The software in the software memory 23 may include instructions to verify the intended state transition, intended by the transmitting first node 2, against a set of predetermined rules and constraints defined by a selected state machine selected from the set.

The method may then for example comprise a verification by the recipient first node of the intended state transition prior to the transmitting first node sending the verification request message at least to the second node 3. The recipient first node 2' may receive an intended transition message from the transmitting first node 2. The intended transition message informs the recipient node 2' of an intended state transition to a selected data record and indicates a selected state machine to be used. In response to receiving the change message, the integrated circuit processor of the recipient node 2' runs the software, i.e. executes the instructions, and verifies whether the intended state transition meets the rules and constraints of the selected state machine. If the state transition meets the rules and constraints: the integrated circuit processor 21 outputs an approval message to the transmitting first node and/or the second node.

In response to receiving the approval message from the recipient node 2', the nodes (e.g. transmitting first node 2 and the second node 3 in this example), continue the state transition and proceed with the method described above. For example, after receiving the approval message, the transmitting first node 2 may output the verification request message. Else, i.e. when the state transition does not meet the rules and constraints, the integrated circuit processor 21 outputs an error message to the transmitting first node and/or the second node. In response to the error message, the nodes receiving the error message stop the state transition and maintain the data record in its current state.

Like the transmitting first node, the recipient node 2' may receive a confirmation message from the second node 3. In response to receiving the conformation message, the integrated circuit processor of the recipient first node 2'may then execute instructions to execute the intended state transition and adjust in the memory the data record according to the accepted state transition. When the confirmation message is not received, e.g. when a time-out period has expired or when the reject message is received from the second node, the recipient first node 2'may reject the intended state transition and maintain the data record unchanged.

With reference to FIG. 6, the verification may generally be performed in any manner suitable for the second node 3 to verify, using the verification data, whether or not the intended state transition meets the rules and constraints of the equal verification state machine.

As illustrated in FIG. 6, the verification data can comprise a transition identification value (hash in FIG. 6) unique for the state transition. The transition identification value can for example be unique for the current state, and e.g. be a cryptographic hash value calculated from the current state. This allows to verify that the second node verifies the correct state transition. The transition identification value can for example be a vector commitment, such as a Merkle tree root hash value calculated from a Merkle tree of which one or more leaves are values of the current state. This allows in addition the second node to verify that the state transition is of the correct current state, and not of another current state. To enhance the correctness, the transition identification value can for example be calculated with more input parameters, such as the new state. For example, the Merkle tree may have more leaves and for example at least three leaves, the leaves comprising current state, new state, transition. In the latter case, for example, a string value derived from the code defining the transition may be used as input for the leave.

The one-way function can generally be any suitable one-way function, preferably with collision resistance, such as a trapdoor one-way function, a hash function or otherwise. Accordingly, the verification data may comprise any suitable values, provided that these are verifiable by an equal verification state machine. The verification data may for example comprise a zero-knowledge proof of a statement, as determined in accordance with a predetermined zero-knowledge protocol, such as a non-interactive protocol, for example a succinct non-interactive argument of knowledge protocol. Preferably, the one-way function generates a proof which satisfies the requirement of completeness, that is if the statement is true, the honest verifier (that is, one following the protocol properly) will be convinced of this fact by the proof. The proof may further satisfy the requirement of soundness, that is if the statement is false, no cheating prover can convince the honest verifier that it is true, except with some small probability. Preferably, with the verification data therein, the verification request message provides zero-knowledge. That is, if the statement is true, no verifier learns from the verification request message anything else about the input variables than that the statement is true.

Suitable zero-knowledge protocols are for example (the cited documents herein incorporated by reference):
▪ Groth16 zkSNARKS - J. Groth. On the size of pairing-based non-interactive arguments. In EUROCRYPT, pages 305-326, 2016;
▪ Bulletproofs - Bulletproofs: Short Proofs for Confidential Transactions and More, Published in: 2018 IEEE Symposium on Security and Privacy (SP);
▪ STARKs - E. Ben-Sasson, I. Bentov, Y. Horesh, and M. Riabzev. Scalable, transparent, and post-quantum secure computational integrity. Cryptology ePrint Archive, Report 2018/046, 2018. https://eprint.iacr.org/2018/046;
▪ SONIC - Mary Maller, Sean Bowe, Markulf Kohlweiss, and Sarah Meiklejohn. 2019. Sonic: Zero-Knowledge SNARKs from Linear-Size Universal and Updatable Structured Reference Strings. In Proceedings of CCS'19, London, UK, November 2019, 20 pages.

In particular, the one-way function may be one as is included the C++ library named "libsnark" as currently available from https://github.com/scipr-lab. In a practical example, the state machine 25,33 is defined in human readable and legible program code, such as in C or C++ code, which is subsequently compiled in an arithmetic circuit or other computer executable code which can be used with such the libsnark library, to obtain a proofing machine 26 at the first node 2 and a verification machine 35 at the second node 3 which perform the proof generation and the verification respectively.

As illustrated in FIG. 6, the verification data may for example comprise a zero-knowledge proof parameter *Pr(x,W)* (in which *x* represents a parameter shared in the verification request message with the second node, and *W* a secret parameter not shared with the second node) of a zero-knowledge protocol *ZK* that the state transition satisfies the rules and constraints of the selected state machine. The verification software may in such a case comprise instructions to verify the proof with the verification state machine in accordance with verification rules of the zero-knowledge protocol.

For example, the zero-knowledge protocol may use the intended state transition as secret parameter *W* and the proof *Pr(x,W)* be that the intended state transition satisfies the rules and constraints of the selected state machine 25. The verification data may then include an identification of the state machine, such that the second node can determine the equal verification state machine and use this in the verification. In such a case, e.g. the identification of the state machine may be the public input parameter *x* of the zero knowledge protocol. Alternatively, the proof may be that, using the selected state machine to generate the proof, an intended state transition is obtained from which the root hash value can be calculated, and the verification use the equal verification state machine to verify the correctness of this statement. In this respect, the parameters *x*,*W* may be single values, e.g. be scalar values, but alternatively be composed of multiple values *x₁,x₂,..., xₙ; W₁,W₂,..., Wₙ* and e.g. be vector or matrix values.

The verification request message can for example comprise the transition identification value as public input parameter *x* to the verifier part *V(x,Pr)* of the zero-knowledge protocol, and the second node use the transition identification value as public input parameter in the verification. For example, the zero-knowledge proof may be proof *Pr*(*x, W*) that the Merkle tree root hash value is calculated from the intended state transition. In such a case, for example the root hash value can be used as public input parameter *x* for the protocol, and as secret witness parameter *W* the intended state transition. In such a case, the proof allows to verify that the transmitting first node knows a transition that is identified by this Merkle root hash. This ensures that the second node is actually verifying the state transition is instructed to be verifying.

The verification may verify other aspects as well. For example, the verification data may e.g. comprise one or more digital signatures, each signed with a private key of a public-private key combination, as required by the rules and constraints of the selected state machine for the intended state transition. The second node may then be provided with public keys corresponding to the private keys of the public-private key combination used in the digital signatures. When verifying the intended state transition, the second node determines from the verification state machine the digital signatures required for the intended state transition, decrypts the digital signature using the public key and determines whether or not all digital signatures decrypt to the same digital message. This allows the second node to verify whether or not the transition that matches the public input *x* is actually signed by the required signers. Thus, the risk of denial-of-state attack can be reduced because, although an attacker could theoretically create a valid zero-knowledge proof for this transition that would satisfy the contract rules, the required signatures would not be present. The digital message can for example derived from the root hash of the Merkle tree, and for example a hash calculated from the root hash.

The invention may also be implemented in a computer program for running on a computer system, at least including code portions for performing some or all steps of a method according to the invention when run on a programmable apparatus, such as a computer system or enabling a programmable apparatus to perform functions of a device or system according to the invention.

A computer program is a list of instructions such as a particular application program and/or an operating system. The computer program may for instance include one or more of: a subroutine, a function, a procedure, an object method, an object implementation, an executable application, an applet, a servlet, a source code, an object code, a shared library/dynamic load library and/or other sequence of instructions designed for execution on a computer system.

The computer program or software may be stored internally on computer readable storage medium or transmitted to the computer system via a computer readable transmission medium. All or some of the computer program may be provided on computer readable media permanently, removably or remotely coupled to an information processing system. The computer readable media may include, for example and without limitation tangible, non-transitory data carriers and data transmission media. The tangible, non-transitory data carriers can for example be any number of the following: magnetic storage media including disk and tape storage media; optical storage media such as compact disk media (e.g., CD-ROM, CD-R, etc.) and digital video disk storage media; nonvolatile memory storage media including semiconductor-based memory units such as FLASH memory, EEPROM, EPROM, ROM; ferromagnetic digital memories; MRAM; volatile storage media including registers, buffers or caches, main memory, RAM, etc.. The data transmission media may e.g. include data-communication networks, point-to-point telecommunication equipment, and carrier wave transmission media, just to name a few.

In the foregoing specification, the invention has been described with reference to specific examples of embodiments of the invention. It will, however, be evident that various modifications and changes may be made therein without departing from the broader scope of the invention as set forth in the appended claims.

For example, in the example of FIG 1, each node in the network is a separate physical node. However, it is alternatively possible to implement multiple nodes on the same physical device, e.g. by storing multiple certificates issued by the central registry based on different private-public key pairs.

Also, the nodes in the network may be any suitable data processing device, such as mainframes, minicomputers, servers, workstations, personal computers, mobile phones and various other wired or wireless data processing devices, commonly denoted in this application as "computer systems". The computer system may for instance include one or more integrated circuit processor, associated memory and a number of input/output (I/O) devices. When executing the computer program, the computer system processes information according to instructions the computer program and produces resultant output information via I/O devices.

The boundaries between logic blocks are merely illustrative and that alternative embodiments may merge logic blocks or impose an alternate decomposition of functionality upon various logic blocks. Thus, it is to be understood that the architectures depicted herein are merely exemplary, and that in fact many other architectures can be implemented which achieve the same functionality. For example, in the example of FIG. 3, the state machine may be integrated in to the transition software and the verification software respectively and do not need to be separate modules. Furthermore, boundaries between the blocks in FIG. 4 are merely illustrative. The multiple operations illustrated with the blocks may be combined into a single operation, a single operation may be distributed in additional operations and operations may be executed at least partially overlapping in time. Moreover, alternative embodiments may include multiple instances of a particular operation, and the order of operations may be altered in various other embodiments.

Furthermore, the verification by the second node may entail a verification of other parameters provided in the verification request message. For example, the verification may comprise determining by the integrated circuit processor 31 in the second node 3 whether the state identification data corresponds to a current state stored in the register, and if the state does not correspond rejecting the intended state transition. Additionally, or alternatively, the second node 3 may verify timing information provided in the verification request message, such as a specific point in time at or a time window within which the intended state transition has to occur or an event that has to precede or succeed the state transition. For example, the second node may verify timing information (and digital signatures signing the timing information) and compare the timing with a time of the second node to determine whether or not the intended state transition occurs at the required point in time (i.e. at the specific point in time, within the time window or before or after the event specified in the verification request message).

Moreover, the data record may represent any suitable type object, such as a tangible object such as a package or a product and the location, and the method and network be used to e.g. track and trace a package during transport, to ensure a secure manufacturing of the product. For example, the data record may be used to track and authenticate the origin of gemstones or other valuable objects, or to follow and control manufacturing of a product. Alternatively, the data record may represent an intangible object, such as a financial value, an electronic document or other type of object on which records have to be maintained in a secure and retraceable manner, and which have to be protected against unauthorized manipulation.

Also, although in the examples Merkle trees are used to generate a commitment to the indented state transition, other vector commitments such as RSA Accumulators or polynomial commitments may be used which allow to make a cryptographic commitment to an ordered sequence of values in such a way that one can later open the commitment at specific positions (e.g. prove with the commitment that a value has a certain position in the sequence). Preferably, the vector commitment is a hiding vector commitment.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one or more than one. Also, the use of introductory phrases such as "one or more" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "one or more" and indefinite articles such as "a" or "an." The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements. The mere fact that certain measures are recited in mutually different claims does not indicate that a combination of these measures cannot be used to advantage.

## Claims

1. A method of operating a distributed database in a data communication network, the network comprising at least one, transmitting, first node and at least one second node;
the first node comprising:
a memory in which at least some data records of the distributed database is stored;
a set of at least one, predetermined and pre-set, state machine;
a filter connected to the memory, to filter predetermined content data out of a data record of the database, and to provide filtered data identifying a current state of the filtered data record, and
an integrated circuit processor arranged to run state transition software to manipulate data records of the distributed database, which integrated circuit processor is connected to the memory and all the state machines of the set;
the second node comprising:
a register memory in which a register with data which identifies whether or not the current state of the data record is allowed to be modified or not;
a set of verification state machines, each state machine of the first node being equal to a verification state machines, such that the set of verification state machines comprises, or consists of, equals for all the state machines of the set of the first node, and
an integrated circuit processor arranged to run verification software to verify the intended state transition against a predetermined set of at least one verification rule defined by a selected verification state machine selected out of the set of verification state machines;
the method comprising:
the integrated circuit processor of the first node running the state transition software, the running comprising:
inputting a selected data record into a selected state machine selected out of the set of state machines and thereby generating an intended state transition of the selected data record from a current state of the selected data record to a new state of the selected data record in accordance with rules and constraints of the selected state machine;
the integrated circuit processor of the first node passing the data record in the current state through the filter to obtain the state identification data representing an identifier unique for the current state of the selected data record, with a content of the selected data record filtered out of the identifier by the filter;
calculating verification data with a one-way function of which the input variables comprise the current state and the new state;
transmitting to the second node a verification request message without the input variables, the verification request message containing: the state identification data, state machine identification data representing an identification of the selected state machine, and verification data;
receiving at the second node the verification request message, and in response thereto the integrated circuit processor in the second node running the verification software to verify the intended state transition for compliance with the rules of the selected state machine, the running comprising:
determining the verification state machine equal to the selected state machine using the state machine identification data;
verifying with the verification data whether or not the intended state transition meets the rules and constraints of the equal verification state machine; and
if the state transition meets the rules and constraints of the equal verification state machine, outputting a confirmation message to the transmitting first node; and
the method further comprising, when the confirmation message is outputted:
the first node in response to receiving the confirmation message: accepting the intended state transition and adjusting the data record according to the intended state transition.

2. A method of manipulating data records in a distributed database by a first node in a network comprising said first node and at least one second node, the first node comprising:
a memory in which at least some data records of the distributed database is stored;
a set of at least one, predetermined and pre-set, state machine;
a filter connected to the memory, to filter predetermined content data out of a data record of the database, and to provide filtered data identifying a current state of the filtered data record, and
an integrated circuit processor arranged to run state transition software to manipulate data records of the distributed database, which integrated circuit processor is connected to the memory and all the state machines of the set;
the method comprising:
the integrated circuit processor running the state transition software, the running comprising:
inputting a selected data record into a selected state machine and thereby generating an intended state transition of the selected data record from a current state of the selected data record to a new state of the selected data record in accordance with rules and constraints of the selected state machine;
the integrated circuit processor of the first node passing the data record in the current state through the filter to obtain the state identification data representing an identifier of the current state of the selected data record;
calculating verification data with a one-way function of which the input variables comprise the current state and the new state,
transmitting to the second node a verification request message without the input variables, the verification request message containing: the state identification data, state machine identification data representing an identification of the selected state machine, and the verification data;
the method further comprising:
in response to receiving a confirmation message from the second node, the integrated circuit processor executing instructions to accept the intended state transition and adjusting in the memory the data record according to the accepted state transition, or else rejecting the intended state transition and maintaining the data record unchanged.

3. A method of manipulating data records in a distributed database by a recipient first node in a network comprising at least two first nodes and at least one second node, the first nodes comprising a transmitting first node and the recipient first node, the transmitting node and the recipient node having stored thereon corresponding data records of the distributed database;
the recipient first node comprising:
a memory in which at least some of the data records of the distributed database are stored,
a set of at least one, predetermined and pre-set, state machine, and
an integrated circuit processor arranged to run software to manipulate the data records, the software including instructions to verify an intended state transition of a data record against a set of predetermined rules and constraints defined by a selected state machine selected from the set, the integrated circuit processor connected to the memory and all the state machines of the set;
the method comprising:
the recipient first node receiving an intended transition message from the transmitting first node, the intended transition message informing the recipient node of an intended state transition to a selected data record, and indicating a selected state machine to be used;
the integrated circuit processor of the recipient first node running the software, and verifying whether the intended state transition meets the rules and constraints of the selected state machine;
if the state transition meets the rules and constraints: outputting an approval message to the transmitting first node and/or the second node, and else outputting an error message to the transmitting first node and/or the second node; and
if a confirmation message is received from the second node, then, in response to receiving the conformation message, the integrated circuit processor executing instructions to accept the intended state transition and adjusting in the memory the data record according to the accepted state transition, and else rejecting the intended state transition and maintaining the data record unchanged.

4. A method of checking changes to data records of a distributed database in a first node of a network, the method performed by a second node of the network,
the second node comprising:
a register memory in which a register is stored with data which identifies whether or not a current state of a data record is allowed to be modified;
a set of verification state machines, each state machine of the first node being equal to a verification state machines, such that the set of verification state machines comprises, or consists of, equals for all the state machines of the set of the first node, and
an integrated circuit processor arranged to run verification software to verify an intended state transition of the data record from the current state to a new state against a predetermined set of at least one verification rule defined by a verification state machine;
the method comprising:
receiving at the second node a verification request message without the contents of the current state or of the new state, the verification request message containing:
state identification data representing an identifier of the current state, state machine identification data representing an identification of a selected state machine used by the first node, and verification data;
in response to the receiving, the integrated circuit processor running the verification software to verify the intended state transition for compliance with the rules of the selected state machine, the running comprising:
selecting a verification state machine equal to the selected state machine using the state machine identification data;
verifying with the verification data whether or not the intended state transition meets the rules and constraints of the equal verification state machine; and
if the state transition meets the rules of the equal verification state machine, outputting a confirmation message to the first node.

5. The method of one or more of the preceding claims, comprising determining by the integrated circuit processor in the second node whether the state identification data corresponds to a current state identified by the data in the register as being allowed to be modified, and if the state does not correspond rejecting the intended state transition.

6. The method of one or more of the preceding claims, wherein the second node outputs a rejection message to the first node if the state transition does not meet the rules, and in response to receiving the rejection message the first node rejects the intended state transition and maintains the data record unchanged.

7. The method of one or more of the preceding claims, wherein the network comprises at least two first nodes and wherein the set of verification state machines of second node comprises an equal verification state machine for all state machines of all the first nodes.

8. The method of one of more of the preceding claims, wherein each first node only stores the data records of the distributed database for which the first node is pre-set, or requested, to perform operations.

9. The method of one or more of the preceding claims, wherein the network comprises at least two first nodes and wherein the first nodes are communicatively connected to exchange messages about state transition to the data records to synchronize corresponding data records between them.

10. The method of claims 3 and one or more of the other preceding claims, comprising, the transmitting first node transmitting the intended transition message to the recipient first node when the rules and constraints of the selected state machine impose approval of the recipient first node to the intended state transition, and wherein the verification message includes a signature of the recipient node for the intended transition message.

11. The method of one or more of the preceding claims, wherein the network is a peer-to-peer network.

12. The method of one or more of the preceding claims, wherein the network is a private network.

13. The method of one or more of the preceding claims, wherein the confirmation message further includes a time-stamp.

14. The method of one or more of the preceding claims, wherein the database represents an unused state transition output data model.

15. The method of one or more of the preceding claims, wherein the intended transition message is only transmitted to selected first nodes, selected by the transmitting first node based on the intended state transition.

16. The method of one or more of the preceding claims, wherein the database is a relational database.

17. The method of one or more of the preceding claims, wherein the verification data comprise a transition identification value unique for the state transition, such as a cryptographic hash value.

18. The method of claim 17, wherein the transition identification value is unique for the current state, for example a vector commitment, such a Merkle tree root hash value calculated from a Merkle tree of which at least one leaves is the current state.

19. The method of claim 18, wherein the Merkle tree has at least three leaves, the leaves comprising current state, new state, digital signatures of the state transition.

20. The method of claim 17 or 18, wherein the verification data comprise a zero-knowledge proof determined in accordance with a predetermined zero-knowledge protocol, the protocol having as secret witness parameter the intended state transition.

21. The method of claim 20, wherein the second node verifies with the proof using the equal verification state machine whether or not the Merkle tree root hash value has been calculated from the intended state transition, in accordance with the verification rules of the zero-knowledge protocol.

22. The method of claim 20 or 21, wherein the second node verifies with the proof whether or not the state transition satisfies the rules and constraints of the selected state machine, and the second node verifies the proof with the verification state machine in accordance with verification rules of the zero-knowledge protocol.

23. The method of one or more of claims 20-22, wherein the verification request message comprises the transition identification value as public input parameter to the verifier part of the zero-knowledge protocol, and the second node uses the transition identification value as public input parameter in the verification.

24. The method of one or more of claims 20-23, wherein the zero-knowledge protocol is a zero-knowledge succinct, non-interactive, argument of knowledge protocol.

25. The method of one or more of claims 20-24, wherein the selected state machine has an interface which is coupled by the integrated circuit processor of the first node to a proof generating machine to generate the proof and wherein the equal verification state machine has an interface which is coupled by the integrated circuit processor of the second node to a verifier machine to verify the proof.

26. The method of one or more of the preceding claims, wherein:
the verification data comprise one or more digital signatures, each signed with a private key of a public-private key combination, as required by the rules and constraints of the selected state machine for the intended state transition;
the second node is provided with public keys corresponding to the private keys of the public-private key combinations used in the digital signatures;
and when verifying the intended state transition, the second node determines from the verification state machine the digital signatures required for the intended state transition, decrypts the digital signature using the public key and determines whether or not all digital signatures decrypt to the same digital message.

27. The method of claim 18 and 26, wherein the digital message is derived from the root hash of the Merkle tree, and for example a hash calculated from the root hash.

28. A first node for a network in which a distributed database is maintained by comprising at least one first node, and at least one second node verifies intended state changes, the first node comprising:
a memory in which at least some data records of the distributed database is stored;
a set of at least one, predetermined and pre-set, state machine;
a filter connected to the memory, to filter predetermined content data out of a data record of the database, and to provide filtered data identifying a current state of the filtered data record, and
an integrated circuit processor arranged to run state transition software to manipulate data records of the distributed database, which integrated circuit processor is connected to the memory and all the state machines of the set;
the state transition software comprising instructions executable by the integrated circuit processor to:
input a selected data record into a selected state machine and thereby generate an intended state transition of the selected data record from a current state of the selected data record to a new state of the selected data record in accordance with rules and constraints of the selected state machine;
pass the data record in the current state through the filter to obtain state identification data representing an identifier of the current state of the selected data record;
calculate verification data with a one-way function of which the input variables comprise the current state and the new state,
transmit to the second node a verification request message, without the input variables, the verification request message containing: the state identification data, state machine identification data represent an identification of the selected state machine, and the verification data;
the state transition software comprising instructions executable by the integrated circuit processor to:
in response to receiving a confirmation message from the second node, accept the intended state transition and adjust in the memory the data record according to the accepted state transition, or to else reject the intended state transition and maintain the data record unchanged.

29. A second node for a network comprising a first node and the second node, the second node comprising:
a register memory in which a register not is stored with data which identifies whether or not a current state of a record is allowed to be modified or;
a set of verification state machines, each state machine of the first node being equal to a verification state machines, such that the set of verification state machines comprises, or consists of, equals for all the state machines of the set of the first node, and
an integrated circuit processor arranged to run verification software to verify the intended state transition against a predetermined set of at least one verification rule defined by a verification state machine;
the verification software comprising instructions executable by the integrated circuit processor to:
run the verification software in response to receiving at the second node a verification request message without the input variables, the verification request message at least containing: a state identification data, state machine identification data representing an identification of a selected state machine used by the first node, and verification data, the running comprising:
selecting a verification state machine equal to the selected state machine using the state machine identification data;
verifying with the verification data whether or not the state transition meets rules and constraints of the verification state machine; and
if the state transition meet the rules of the equal verification state machine, outputting a confirmation message to the first node.

30. A network comprising at least one first node as claimed in claim 28 and at least one second node as claimed in claim 29, the first and second node being communicatively connected to each other.

31. The network of claim 30, wherein each node has a separate network address, such as a separate IP address.

32. A first node as claimed in claim 28,a second node as claimed in claim 29 or the network of one or more of claims 30-31, for use, or being used, in the method of one or more of claims 1- 27.

33. A computer program product comprising code portions for performing some or all steps of the method of one or more of claims 1- 27, when run on a programmable apparatus or representing transition software or verification software for the method of one or more of claims 1- 27.

34. A non-transitory, tangible data carrier readable by a programmable apparatus, with data stored thereon representing code portions for performing some or all steps of the method of one or more of claims 1- 27 when executed by a programmable apparatus, or representing transition software or verification software for the method of one or more of claims 1- 27.

35. A non-transitory, tangible data carrier readable by a programmable apparatus, with data stored thereon representing records of a distributed database obtained with, or obtainable by the method of one or more of claims 1- 27.
